Europäisches Patentamt

**European Patent Office**

Office européen des brevets

(11) Veröffentlichungsnummer: **0 024 736**

**A1**

(12) **EUROPÄISCHE PATENTANMELDUNG**

(21) Anmeldenummer: **80105173.1**

(22) Anmeldetag: **30.08.80**

(51) Int. Cl.³: **E 01 C 9/08**
**E 01 C 5/00, E 04 B 1/60**

(30) Priorität: **03.09.79 CH 7952/79**

(43) Veröffentlichungstag der Anmeldung:
**11.03.81 Patentblatt 81/10**

(84) Benannte Vertragsstaaten:
**BE FR IT**

(71) Anmelder: **Ruckstuhl, Willi**
**Augwilerstrasse 43**
**CH-8302 Kloten(CH)**

(72) Erfinder: **Ruckstuhl, Willi**
**Augwilerstrasse 43**
**CH-8302 Kloten(CH)**

(74) Vertreter: **Siebert, Rolf**
**c/o Dr. A.R. Egli & Co. Horneggstrasse 4**
**CH-8008 Zürich(CH)**

(54) **Fahrbahndecke aus einzelnen, miteinander verbundenen Elementen.**

(57) Zur kraftübertragender Verbindung und gegenseitiger Verriegelung der Einzelelemente von insbesonders temporären Fahrbahndecken weist jedes Fahrbahnelement (1) in jeder zu stossenden Stirnfläche eine halbcylinderförmige, nach oben offene Aussparung (3) auf, die von einem Riegel (6) durchsetzt wird. Ein im wesentlichen cylindrisches Verbindungsorgan (2) mit an seiner Unterseite zwei L-förmigen Klinken (26) wird von oben her in den durch die Aussparungen (3) zweier benachbarter Fahrbahnelemente gebildeten Hohlraum eingesetzt und dann gedreht, sodass die horizontalen Teile (28) der Klinken (26) unter die Riegel (6) zu liegen kommen. Dann liegt die Oberseite des Verbindungsorgans (2) bündig mit der Oberseite der Fahrbahnelement, und das Organ (2) lagert auf Platten (4) auf, die stirnseitig den unteren Teil einer jeden Aussparung (3) begrenzen. Ein aus zwei mit Spiel aneinander gehakten halbcylindrischen Teilen (2a,2b) zusammengesetztes Organ (2) ermöglicht das Verbinden von gegeneinander geneigten Fahrbahnelementen.

Fig. 1

1.

Fahrbahndecke aus einzelnen, miteinander verbundenen
Elementen
---------------------------------------------------------

Die Erfindung betrifft eine Fahrbahndecke aus einzelnen,
miteinander verbunden Elementen.

Oft muss auf Baustellen, beispielsweise bei der Umleitung
einer Hauptstrasse infolge Bauarbeiten, oder zur Herstellung einer Zufahrt zu einem abseits einer Strasse gelegenen
Bauplatz eine temporäre Strasse erstellt werden, die nach
Beendigung der Bauarbeiten wieder aufgehoben wird. Je nach
Umfang und vor allem nach dem Gewicht des darüber rollenden Verkehrs sind solche temporären Fahrbahnen teilweise
sehr solid ausgeführt, was die Baukosten in die Höhe treibt;
namentlich auch der Abbruch der Fahrbahn und die Wiederherstellung des ursprünglichen Zustandes können einen beträchtlichen Zeit- und Kostenaufwand verursachen.

Die Erfindung bezweckt, eine Fahrbahndecke zu schaffen, die
namentlich für solche Zwecke bestimmt ist und den Vorteil
hat, rasch und mit minimem Aufwand verlegt und ebenso rasch
wieder zwecks Weiterverwendung an einem Ort demontiert zu
werden.

Eine solche Fahrbahndecke zeichnet sich erfindungsgemäss
durch die Merkmale des Anspruches 1 aus.

Ein Ausführungsbeispiel der erfindungsgemässen Fahrbahndecke
ist in den beiliegenden Zeichnungen dargestellt; es zeigen:

Fig. 1   eine auseinandergezogene Darstellung des beweglichen
         Verschlusses in seiner eingebauten Stellung sowie
         eines Elementes mit dem diesen Verschluss aufnehmenden Teil (das andere, mit diesem verbundene Element ist hier nicht dargestellt) in perspektivischer
Ansicht,

Fig. 2  eine Hälfte des Verschlusses, ebenfalls perspektivisch,

Fig. 3  die in jedem Element enthaltenen Teile zur Aufnahme
des Verschlusses,

Fig. 4  eine Ansicht zweier miteinander verbundenen Elemente von oben,

Fig. 5  einen Schnitt längs der Linie V-V,

Fig. 6  einen Schnitt längs der Linie VI-VI, und

Fig. 7a,7b  ein Mittel zur Verriegelung des Verschlusses.

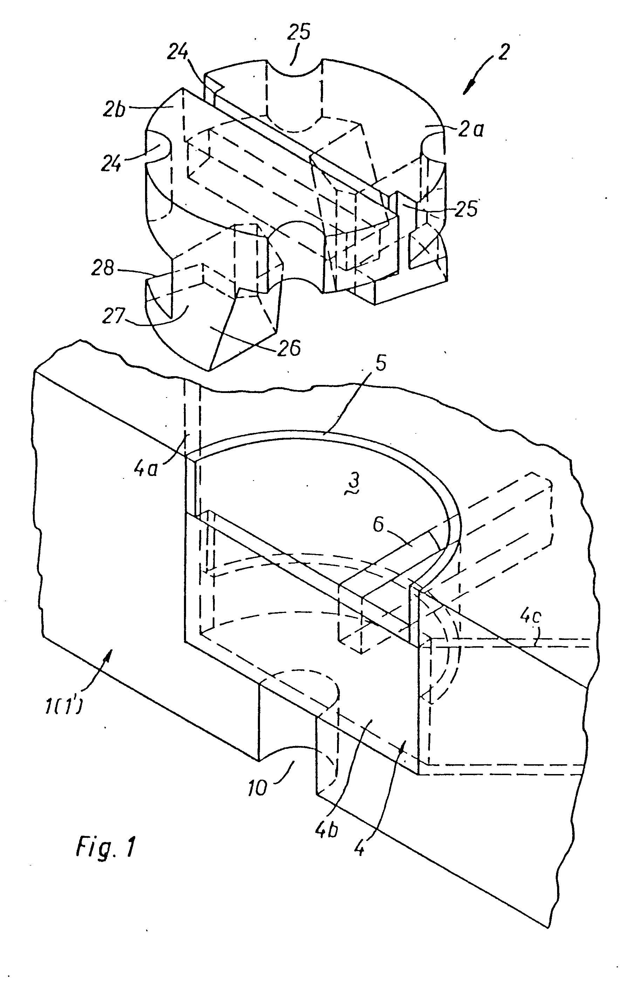

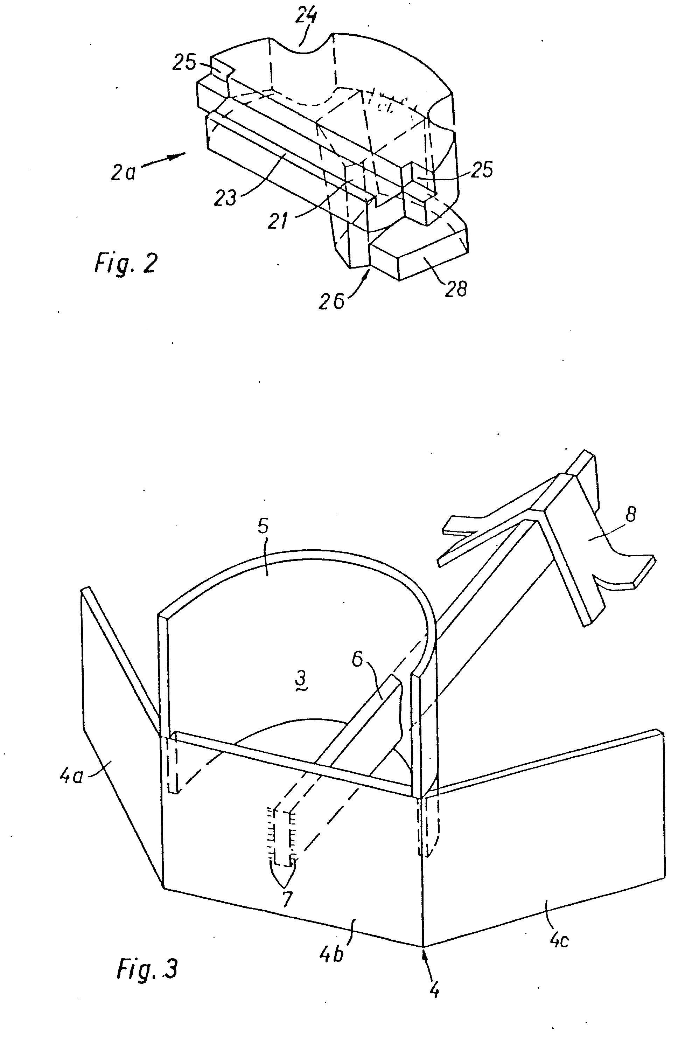

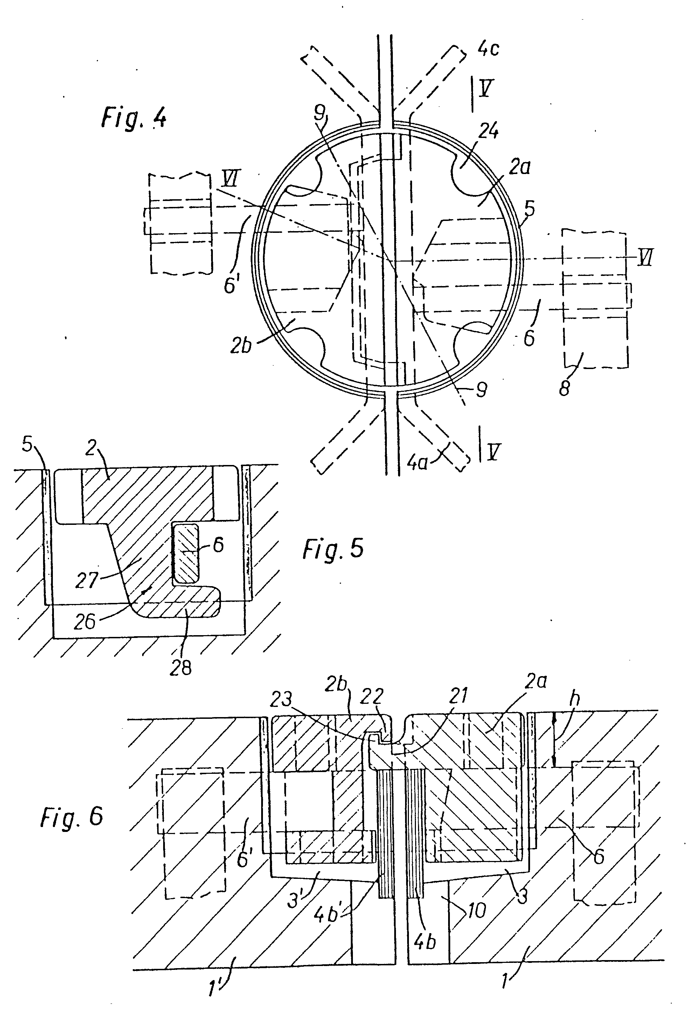

Fig. 1 zeigt in der unteren Hälfte ein Fahrbahnelement 1
aus Beton, das mit einem zweiten, namentlich in Fig. 6
dargestellten Element 1' mittels des gesamthaft mit 2
bezeichneten Verschlusses verbunden werden soll. Zu diesem
Zweck weist jedes dieser vorwiegend rechteckigen oder
quadratischen Elemente 1,1' eine halbrunde Aussparung 3,3'
auf, die zusammen einen Hohlraum zur Aufnahme des Verschlusses 2 bilden. Jede Aussparung ist mit verschiedenen Teilen
aus Metall ausgekleidet bzw. durchsetzt, die in Fig. 3 der
Deutlichkeit halber in derselben Anordnung, aber ohne den
Elementkörper, dargestellt sind. Man erkennt eine vertikale
Platte 4, die aus drei einzelnen, winkelförmig zueinander
angeordneten Abschnitten 4a,4b,4c besteht, wobei gemäss
Fig. 1 der mittlere Abschnitt 4b die halbrunde Aussparung
3 zwar begrenzt, jedoch nur auf einem Teil ihrer Höhe.
An diesen mittleren Abschnitt 4b ist ein Halbring 5 so
angeschlossen, dass dieser Abschnitt 4b gewissermassen
dessen Durchmesser verkörpert. Der Halbring 5 ragt beträchtlich über den oberen Rand des Abschnitts 4b heraus,
nämlich bis zur Oberfläche des Elementes 1, und stützt
sich auf dem Abschnitt 4b ab, ist aber andererseits in
seinem unteren Teil etwas zurückversetzt, sodass sich
dieser untere Teil an den Abschnitt 4b anlegen und mit
diesem verschweisst werden kann. Der Halbring 5 wird von
einem kräftig ausgeführten Riegel 6,

3.

durchsetzt, der am Abschnitt 4b unter einem rechten Winkel zu diesem endet. Er ist mit dem Abschnitt 4b verschweisst; zur Verdeutlichung sind hier Schweissnähte 7 (Fig. 3) eingezeichnet. Die Platte 4, der Halbring 5 und der Riegel 6 bilden somit einen starren Einsatz im Element 1. Wie namentlich aus Fig. 3 ersichtlich, ist dieser Riegel 6 asymmetrisch zur Aussparung 3 angeordnet und zwar aus noch zu erläuternden Gründen. Die Höhenlage dieses Riegels 6 relativ zur Platte 4 und zum Halbring 5 ist namentlich aus Fig. 6 ersichtlich.

An seinem hinteren, völlig von Beton des Elementes 1 umgebenen Ende trägt der Riegel 6 ein dachförmiges Druckverteilungselement 8. Dieses Druckverteilungselement hat die Aufgabe, die auf den Riegel 6 einwirkenden Kräfte, die im wesentlichen nach oben wirken, auf eine breite Fläche innerhalb des Elementes zu verteilen und so die Spannungen herabzusetzen.

Sämtliche in Fig. 3 dargestellten Teile 4,5,6 und 8 bestehen vorzugsweise aus Flussstahl und sind miteinander verschweisst, obwohl wie erwähnt lediglich die Schweissnähte 7 dargestellt sind.

Zu erwähnen ist noch, dass das Fahrbahnelement 1 solche Aussparungen 3 samt den Teilen gemäss Fig. 3 überall dort aufweist, wo es mit anderen gleichen Elementen verbunden werden muss. Man wird also im allgemeinen auf allen vier Stirnseiten wenigstens eine Aussparung 3 und je einen Satz dieser Teile vorsehen und zwar so, dass beim Aneinandersetzen der Elemente diese Aussparungen sich zum erwähnten Hohlraum 3,3' ergänzen.

Der Innenradius des Halbrings 5 ist so dimensioniert, dass er (von den Toleranzen abgesehen) dem Radius des kreisförmigen Verschlusses 2 entspricht. Gemäss den Figuren 1 und

4.

2 besteht der Verschluss bei dieser Ausführungsform zweckmässig aus zwei annähernd symmetrisch ausgebildeten halbzylindrischen Körpern 2a,2b. Sie unterscheiden sich lediglich dadurch voneinander, dass der in Fig. 2 dargestellte
Körper 2a längs seiner geraden Stirnseite eine Rinne 21
aufweist, die als Kupplungsglied für einen nach unten
ragenden, gleich langen Vorsprung 22 des anderen Teiles
2b bildet, wie dies deutlich aus Fig. 6 erkennbar ist.
Dort ist auch ersichtlich, dass die Rinne 21 eine erheblich grössere Breite aufweist als die Dicke des Vorsprunges
22; ebenso weist aber der Vorsprung 22 vom übrigen Körper
2b einen Abstand auf, der grösser ist als die Dicke des
äusseren Randes 23 der Rinne. Es wird damit erreicht, dass
zwischen den beiden Körpern ein genügend grosser Spalt
verbleibt. Dieser dient einerseits dazu, die Körper 2a,2b
gegenseitig geneigt anzuordnen und dennoch miteinander zu
verriegeln, andererseits dient er auch als Wasserablauf.
Diesem letzteren Zweck dienen auch die halbkreisförmigen
Ausnehmungen 24 in beiden Körpern, die ausserdem auch noch
zur Gewichtseinsparung und zur Reibungsverminderung beim
noch zu erwähnenden Drehen des Verschlusses dienen. Ein
weiterer kleiner Unterschied zwischen den beiden Körpern
2a,2b besteht noch darin, dass der Körper 2a zwei einander
annähernd diametral gegenüberliegende rechteckige oder
quadratische Ausnehmungen 25 aufweist (Fig. 1 und 2). Der
Zweck wird bei der nachfolgenden Beschreibung der Zusammensetzung erläutert. Jeder der einen Verschlussteil
bildenden Körper 2a,2b weist eine aus den Figuren 1,2 und
5 deutlich sichtbare Klinke 26 auf, die aus dem Verschlusskörper nach unten ragt und im Querschnitt annähernd
L-förmig ausgebildet ist, mit einer vertikalen Wurzel 27
und einem horizontalen Zahn 28.

Das Zusammensetzen der Elemente zu einer zusammenhängenden
Fahrbahn ist denkbar einfach. Die Elemente werden auf den
Untergrund verlegt, wobei lediglich dafür gesorgt werden

5.

muss, dass erstens die Aussparungen 3,3' benachbarter Elemente miteinander übereinstimmen, die Elemente nicht also gegeneinander verschoben hingelegt werden und dass zweitens die Aussparungen noch den richtigen Abstand voneinander aufweisen, also einen gewissen Spalt bilden, damit der Verschluss 2 überhaupt in den Hohlraum hineinpasst. Dies kann durch Messen oder gegebenenfalls mittels einer Montageschablone kontrolliert werden. Nun werden beim zweiteiligen Verschluss die beiden Körper 2a,2b durch Ineinanderlegen von Rinne 21 und Vorsprung 22 miteinander gekuppelt und dann als Ganzes in den genannten Hohlraum hineingesetzt. Zu beachten ist jedoch, dass dieses Einsetzen nicht etwa wie in Fig. 1 dargestellt erfolgt (jene Figur zeigt den Verschluss in bereits verriegeltem Zustand), sondern so, dass die Rinne und der Vorsprung einen Winkel mit der Trennfuge zwischen den beiden Elementen aufweisen; die Schräglage ist in Fig. 4 symbolisch durch die Linie 9-9 dargestellt. Es ist nämlich sonst nicht möglich, die Klinken 26 an den Riegeln 6 vorbei nach unten bewegen zu können. Man erkennt nun auch, weshalb die Riegel 6 asymmetrisch in die Halbringe 5 eingesetzt sind; dadurch ergibt sich auf der einen Seite ein grösserer Raum zum Einfahren der Klinken. Wenn nun der Verschluss auf den beiden Abschnitten 4b,4b' (Fig. 6) der vertikalen Platten aufliegt, wird das schon erwähnte Werkzeug in die Ausnehmungen 25 eingesetzt und dann der ganze Verschluss in die Lage gemäss den Figuren 1 und 4 verdreht, sodass also die Rinne 21 und der Vorsprung 22 parallel zur Fuge zwischen den beiden Elementen liegen. Bei dieser Drehung greifen nun die Klinken 26 unter die Riegel 6; die Drehung endet, wenn die Wurzeln 27 an den Riegeln anstossen (Fig. 5). Damit sind die Elemente miteinander verbunden.

Die Platten 4 sind so angeordnet, dass ihr oberer Rand sich um die Höhe h unterhalb der Oberfläche der Elemente 1,1' befindet (Fig. 6). Andererseits weisen die beiden Körper 2a,2b eine Dicke, die genau dieser Höhe entspricht, auf. Demzufolge bildet der Verschluss mit den angrenzenden Elementen eine ebene Fläche. Die Fuge zwischen den Elementen und das erwähnte Spiel zwischen der Rinne 21 und dem Vorsprung 22 gestatten es andererseits, dass die beiden Elemente auch gegebenenfalls eine beachtliche Neigung zueinander aufweisen können, bis zu 15 %, sodass auch sehr starke Gefällsbrüche mit diesen Elementen überwunden werden können. Dies ist namentlich dort von Vorteil, wo Steilrampen, z.B. Zufahrten zu Baugruben, mit dieser Fahrbahndecke belegt werden müssen.

Falls jedoch der Untergrund praktisch eben ist, kann anstelle eines zweiteiligen Verschlusses auch ein solcher verwendet werden, der aus einem einzelnen Körper besteht und lediglich die halbkreisförmigen Ausnehmungen 24, die Ausnehmungen 25 für das Werkzeug und die beiden Klinken 26 aufweist. Die Ausnehmungen 24 dienen dann auch zur Entwässerung; das Wasser läuft auf den Boden des Hohlraumes 3,3' und von dort durch eine weitere kleinere Ausnehmung 10 (Fig. 1) in den Untergrund. Das Einsetzen dieses Verschlusses erfolgt in der schon beschriebenen Weise.

Die dargestellte Fahrbahndecke weist ausser dem schon erwähnten Vorteil der Ueberwindung starker Gefällsbrüche noch folgende Vorteile auf:

Die Wechselwirkung der Riegel 6 und Klinken 26 sorgt dafür, dass benachbarte Elemente gegenseitig auf ein gemeinsames Niveau ausgerichtet werden, auch wenn sie vor der Verriegelung noch Höhenunterschiede aufwiesen. Damit brauchen an die Planierung des Untergrundes überhaupt keine Anforderungen gestellt zu werden; eine Grobplanie genügt.

Weil die gesamte Verriegelung im oberen Teil der Elemente angebracht ist (siehe namentlich Figur 6), können diese beliebig dick gemacht werden, d.h. entsprechend den zulässigen Beanspruchungen. Insbesondere kann im unteren Teil auch eine durchgehende Armierung in den Elementen vorgesehen sein.

Das rasche Zusammensetzen und Lösen gestattet es, ein allenfalls beschädigtes Element rasch zu ersetzen, ohne die Nachbarelemente zu beeinflussen.

Allfällige Ungenauigkeiten in den Elementen werden durch den Verschluss weitgehend ausgeglichen.

Die Platte 4, insbesondere ihr sichtbarer Abschnitt 4b, kann zum Anheben des Elementes mittels Hebezeugen verwendet werden.

Der Druck von einem Element wird auf das andere übertragen. Dies geht besonders aus Fig. 6 hervor, wo deutlich sichtbar ist, dass die Rinne 21 des rechten Elementes 1 mit ihrer Oberseite auf den Abschnitt 4b' des linken Elementes 1' aufliegt. Andererseits drückt der Vorsprung 22 dieses Elementes über die Rinne 21 auf den Abschnitt 4b des rechten Elementes 1. Diese Ueberlegungen können auch dann gelten, wenn die beiden Elemente unter einem Winkel zueinander stehen; sie gleichen sich dann in ihrer Höhenlage so weit aus, bis der Verschluss, insbesondere der Teil 2a, wieder auf den beiden Abschnitten 4b,b' aufliegt.

Die Verlegung dieser Fahrbahndecke ist somit denkbar einfach; die Elemente sind immer wieder verwendbar und können leicht transportiert sowie auch platzsparend gelagert werden.

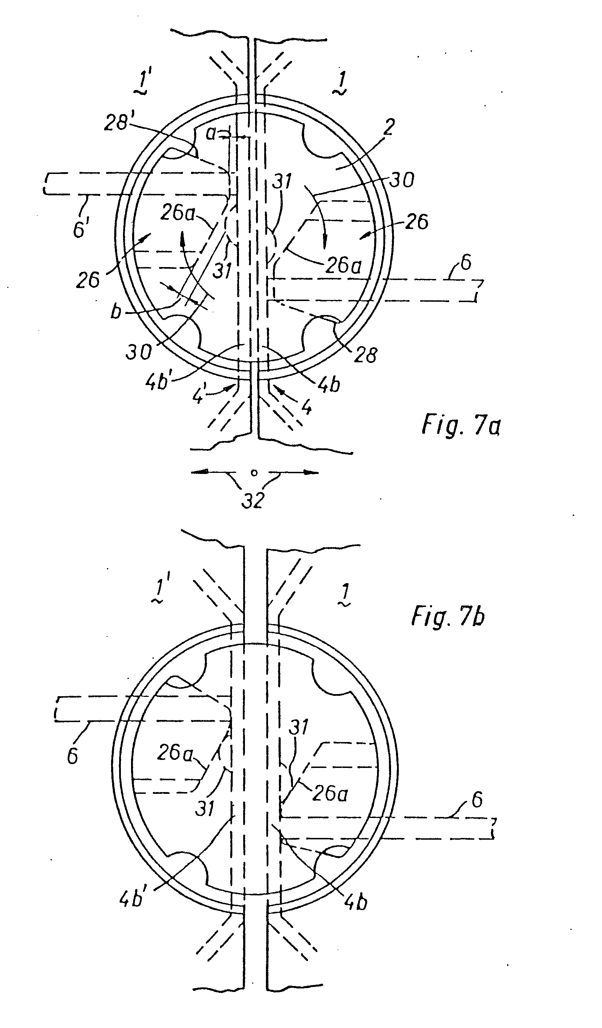

Die Figuren 7a und 7b zeigen ein einfaches Mittel, das dazu dient, ein Zurückdrehen der Klinken 26 unter den Riegeln 6,6' hervor zu verhindern, damit die Verbindung der Elemente 1,1' nicht unbeabsichtigt teilweise gelöst Ein solches Zürückdrehen der Klinken kann unter Umständen dann autreten, wenn wenigstens auf ein Element eine Kraft einwirkt, welche die Tendenz hat, dieses Element vom andern wegzuziehen.

Die beiden Figuren zeigen die Wirkungsweise dieses Mittels; in Fig. 7a ist dieses nach dem Zusammensetzen der beiden Elemente und in Fig. 7b in seiner Wirkung, nach aufgetretener Verschiebung der Elemente 1,1', dargestellt. Die Ansicht ist dieselbe wie bei Fig. 4, und es sind auch dieselben Teile (ausgenommen der Teil 8) sichtbar. Allerdings ist in diesen beiden Figuren nunmehr ein einteiliger Verschluss dargestellt, sodass die in Fig. 4 ersichtlichen und in Figur 6 mit 21 bzw. 22 bezeichneten Verbindungsteile (Rinne und Vorsprung) fehlen.

Wie bereits erläutert, ist der Verschluss eingesetzt und hierauf entsprechend den beiden Pfeilen 30 gedreht worden, bis jede Klinke 26 sich gegen den entsprechenden Riegel 6 bwz. 6' anlegt; die Zähne 28 der Klinken untergreifen nun den jeweiligen Riegel. Ueblicherweise weist jede Klinke, wie aus Fig. 7a ersichtlich, einen geringfügigen Abstand vom entsprechenden Abschnitt der Platt 4 auf; dieser Abstand ist in Fig. 7a für den Abschnitt 4b' und die diesem benachbarte Klinke dargestellt und mit a bezeichnet. An den Abschnitten 4b',4b ist jeweil ein Vorsprung 31 angebracht, der in diesen Figuren halbkreisförmig erscheint; es ist für seine Wirkungsweise belanglos, ob er halbkugelförmig oder halbzylindrisch{ mit Längsachse senkrecht zur Bildebene) ausgebildet ist, und sogar eine Dreieckform wäre denkbar. Wesentlich ist nur, dass jeder Vorsprung 31 von

9.

der in benachbarten Seitenwand 26a der betreffenden
Klinke einen geringfügigen Abstand aufweist, der in
der linken Hälfte der Fig. 7a mit b bezeichnet ist.
Dieser Abstand ist deswegen von Bedeutung, weil die
Schwenkbewegung der Klinken 26 entsprechend den Pfeilen
30 durch diese Vorsprünge 31 nicht behindert werden
darf.

Wirken nun auf die Elemente 1', 1 Kräfte infolge Benützung der Fahrbahn, so können sich die Elemente im
Sinne der Pfeile 32 auseinanderbewegen. Der Abstand
voneinander wird damit grösser, wie aus einem Vergleich
der beiden Figuren 7a und 7b hervorgeht. Mit den Elementen streben auch die Abschnitte 4b' und 4b samt
ihren Vorsprüngen 31 auseinander, da sie Teile der
Elemente 1',1 sind. Die Klinken 26 andererseits, welche
Teile des Verschlusses 2 sind, behalten ihre Lage jedoch
bei. Somit bewegen sich die Vorsprünge 31 gegen die
Seitenwände 26a hin. Die Bewegung endet, wenn jeder
Vorsprung die entsprechende Seitenwand berührt, oder
wenn die Abschnitte 4'b, 4b die Klinke berühren, oder
wenn beides zusammen auftritt. Auf alle Fälle verschwinden die Abstände a und b. Dadurch wird aber ein Zurückdrehen der Klinken 26 und damit ein Lösen unmöglich;
der Verschluss 2 ist verriegelt (Fig. 7b).

Die dargestellte Wirkungsweise der Vorsprünge 31 und
der Klinken gilt selbstverständlich in genau gleicher
Weise auch für einen zweiteiligen Verschluss, und die
Vorsprünge sind auch dort gleich wie hier dargestellt
ausgebildet.

10.

## Patentansprüche

----------------

1. Fahrbahndecke aus einzelnen, miteinander verbundenen Elementen, dadurch gekennzeichnet, dass jedes Element (1,1') eine Ausnehmung (3,3') aufweist, die mit der entsprechenden Ausnehmung des angrenzenden Elementes (1') zusammen einen Hohlraum zur Aufnahme eines Verschlusses (2) bildet, der mit wenigstens zwei Klinken (26) versehen ist, von denen jede bei verriegeltem Verschluss mit einem Riegel (6,6') an jedem Element (1,1') zusammenwirkt, der im Element verankert ist und in die Ausnehmung (3,3') hineinragt.

2. Fahrbahndecke nach Anspruch 1, dadurch gekennzeichnet, dass der Verschluss (2) aus zwei Teilen (2a,2b) besteht, die nur ausserhalb des Hohlraumes (3,3') miteinander zusammensetzbar bzw. voneinander trennbar sind.

3. Fahrbahndecke nach Anspruch 1 oder 2, dadurch gekennzeichnet, dass die Ausnehmungen (3,3')halbkreisförmig sind und der Verschluss (2) im wesentlichen zylindrisch ist.

4. Fahrbahndecke nach den Ansprüchen 1 und 3, dadurch gekennzeichnet, dass die Klinken (26) von der Unterseite des Verschlusses (2) nach unten ragen und L-förmig ausgebildet sind, wobei der horizontale Teil (28) dieser L-Form bei beiden Klinken vom senkrechten Teil (27) nach derselben Seite absteht, sodass er durch Drehen des in den Hohlraum (3,3') eingesetzten Verschlusses unter den entsprechenden Riegel (6,6') schiebbar ist.

5. Fahrbahndecke nach Anspruch 2, dadurch gekennzeichnet, dass der eine Teil (2b) eine nach oben offene Rinne (21) und der andere Teil (2a) einen in diese Rinne eingreifenden und die beiden Teile dadurch verbindenden Vorsprung (22) aufweist, wobei die Rinne (21) eine grössere Breite aufweist als die Dicke des Vorsprunges.

6. Fahrbahndecke nach Anspruch 1 oder 2, dadurch gekennzeichnet, dass jede Ausnehmung (3,3') an ihrer offenen Seite von einer Platte (4) begrenzt ist, die im Element verankert ist und deren Oberseite unterhalb der Oberfläche des Elementes (1,1') liegt, sodass diese Platte, zusammen mit derjenigen des angrenzenden Elementes, ein Auflager für den Verschluss (2) bildet.

7. Fahrbahndecke nach Anspruch 6, dadurch gekennzeichnet, dass der Riegel (6,6') die Ausnehmung (3,3') durchquert und mit dem mittleren Abschnitt (4b,4b') der genannten Platte verbunden ist.

8. Fahrbahndecke nach Anspruch 1, dadurch gekennzeichnet, dass jede Ausnehmung (3,3') über einen Teil ihrer Höhe mit einem Halbring (5,5') ausgekleidet ist.

9. Fahrbahndecke nach einem der vorangehenden Ansprüche, dadurch gekennzeichnet, dass an jedem mittleren Abschnitt (4b,4b') der die Anusnehmung (3,3') begrenzenden Platte (4) auf dessen von der Ausnehmumg abgewendeten Seite je ein Vorsprung (31) angebracht ist, der sich bei einer relativ zum Verschluss (2) erfolgenden Verschiebung des betreffenden Elementes (1,1') und damit des mittleren Abschnittes (4b,4b') gegen die Seitenwand (26a) der ihm (31) benachbarten Klinke (26) anlegt und diese in ihrer Endstellung blockiert.

*Fig. 1*

24

25

2a

23

21

Fig. 2

25

26

28

5

6

3

8

4a

7

4b

4

4c

Fig. 3

Fig. 4

Fig. 5

Fig. 6

Fig. 7a

Fig. 7b

**0024736**

Nummer der Anmeldung

**EP 80 10 5173**

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - B - 1 190 160</u> (BETEILIGUNGS- UND PATENTVERWALTUNGSGESELLSCHAFT) <br> * Spalte 1, Zeilen 1-4, 7-18, 27-31,42/43; Spalte 3, Zeilen 3-9, 15-18, 27-32, 41-43, 48, 51-53; Spalte 4, Zeilen 19-21; Figuren 1-6 * | 1-4,6, 8,9 |
| X | <u>US - A - 2 672 660</u> (BECKER) <br> * Spalte 2, Zeilen 24-28, 31-40, 42/43, 46-56; Spalte 3, Zeilen 1-10, 17-20, 26-29, 57-61, 65-68; Figuren 1-6 * | 1,3,4, 9 |
| | <u>DE - A - 2 158 642</u> (MASCHINEN-FABRIK AUGSBURG-NÜRNBERG) <br> * Seite 1, Zeilen 1-6; Seite 4, Zeilen 16-21; Seite 5, Zeilen 3-7; Figuren 1-3 * | 1,3 |
| | <u>US - A - 3 175 476</u> (FRANKS) <br> * Spalte 1, Zeilen 9-12; Spalte 2, Zeilen 43-46, 52/53, 62-70; Spalte 3, Zeilen 65-73; Figuren 2,4 * | 1,2,5 |
| | <u>FR - E - 61 013</u> (GUERRIER et al.) <br> * Seite 1, linke Spalte, Zeilen 1-7; Seite 2, linke Spalte, Zeilen 8-12, 16-20, 24-26; Figuren 6-9 * | 1,6,8 |

./.

### KLASSIFIKATION DER ANMELDUNG (Int Cl.³)

E 01 C 9/08
E 01 C 5/00
E 04 B 1/60

### RECHERCHIERTE SACHGEBIETE (Int Cl.³)

E 01 C
E 04 B
F 16 B

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-11-1980 | SCHUMAN |

EPA form 1503.1  06.78

Europäisches
Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | CH - A - 330 735 (VOBAG AG FÜR VORGESPANNTEN BETON) * Seite 1, Zeilen 27-52; Figuren 1-3 * ----- | 1,6 | |

RECHERCHIERTE SACHGEBIETE (Int. Cl.³)